# EUROPÄISCHE PATENTSCHRIFT

(11) **EP 3 486 523 B1**
(45) Veröffentlichungstag und Bekanntmachung des Hinweises auf die Patenterteilung: **17.06.2020**
(21) Anmeldenummer: 17202335.0
(22) Anmeldetag: 17.11.2017
(51) Int. Cl.: F16H 1/30, F16H 57/08

(54) **PLANETENTRÄGER**
PLANETARY CARRIER
PORTE-SATELLITES

(43) Veröffentlichungstag der Anmeldung: 22.05.2019
(73) Patentinhaber: IMS Gear SE & Co. KGaA, 78166 Donaueschingen (DE)
(72) Erfinder: Albert, Simon, 79848 Bonndorf im Schwarzwald (DE); Kieninger, Matthias, 78050 Villingen-Schwenningen (DE); Kruselburger, Markus, 78652 Deißlingen (DE)
(74) Vertreter: Westphal, Mussgnug & Partner Patentanwälte mbB

(56) Entgegenhaltungen:
- WO-A1-2015/036328
- CH-A1- 707 435
- JP-A- H05 332 407
- US-A- 1 276 855

## Beschreibung

Die vorliegende Erfindung betrifft einen Planetenträger zum Lagern zumindest eines Planetenrads in einem Planetengetriebe für eine Verstelleinrichtung zum Verstellen zweier zueinander verstellbarer Bauteile. Weiterhin betrifft die Erfindung ein Planetengetriebe, welches einen derartigen Planetenträger umfasst. Darüber hinaus betrifft die Erfindung eine Motor-Getriebeanordnung mit einem solchen Planetengetriebe.

Planetengetriebe finden in vielen Antriebssträngen Verwendung, da sie große Über- oder Untersetzungsverhältnisse auf kleinem Raum ermöglichen. Ein Anwendungsbereich stellen Hilfsantriebe für Kraftfahrzeuge dar, mit denen zwei zueinander verstellbare Fahrzeugteile relativ zueinander bewegt werden können. Ein Beispiel für derartige Hilfsantriebe sind elektromechanische Aktuatoranordnungen, die unter anderem zum Betätigen von Parkbremsen von Kraftfahrzeugen eingesetzt werden. Andere Hilfsantriebe werden beispielsweise für Sitzlängsverstellungen, Heccklappenverstellungen, Fensterheber und Schiebedachverstellungen eingesetzt. Da in Kraftfahrzeugen der zur Verfügung stehende Raum knapp bemessen ist, können Planetengetriebe ihre Vorteile hier besonders gut ausspielen.

Ein anderer Anwendungsbereich sind beispielsweise Antriebe für Fenster und Rollläden von Gebäuden, die im Zuge der zunehmenden Digitalisierung von Gebäuden, welche mit dem Begriff "Smart Home" bezeichnet wird, eine immer wichtigere Rolle spielen.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Bauteile mit der gewünschten, vergleichsweise langsamen Bewegung relativ zueinander verstellen zu können. Zudem sind die vom Elektromotor abgegebenen Drehmomente häufig nicht ausreichend, um die Bauteile bewegen zu können, so dass auch aus diesem Grund Untersetzungen notwendig sind.

Auch wenn bekannte Planetengetriebe hohe Über- oder Untersetzungsverhältnisse bereitstellen können, reichen diese in einigen Anwendungsbereichen nicht aus, so dass man gezwungen ist, zwei- oder mehrstufige Getriebe zu verwenden, in welchen zwei oder mehrere Planetengetriebe im Antriebsstrang angeordnet sind. Hierdurch wird die Komplexität des Antriebsstrangs erhöht, wodurch im Vergleich zu einem einstufigen Planetengetriebe die Fertigung verkompliziert, die Ausfallwahrscheinlichkeit erhöht und der Bauraum vergrößert werden.

Eine Möglichkeit, die Über- oder Untersetzungsverhältnisse von Planetengetrieben zu steigern, liegt in der Verwendung von sogenannten "Koaxial-Getrieben". Die Zahnräder von üblichen Planetengetrieben sind als Stirnräder ausgebildet. Bei Koaxial-Getrieben ist das Sonnenrad als eine Schnecke und die Planetenräder mit einer entsprechend angepassten Planetenradverzahnung ausgebildet. Das Hohlrad weist eine der Planetenradverzahnung entsprechende Innenverzahnung auf.

Ein besonders auffälliges Merkmal derartiger Koaxial-Getriebe ist die Tatsache, dass die Planetenradachsen nicht parallel zur Drehachse der Schnecke, sondern windschief hierzu verlaufen. Zumindest diesbezüglich ist der Begriff "Koaxial-Getriebe" nicht zutreffend, so dass derartige Getriebe im Folgenden als Schnecken-Planetengetriebe bezeichnet werden. Derartige Schnecken-Planetengetriebe sind beispielsweise in der WO 2015/036328 A1, der JP H05 332407 A, der WO2014/108144 A1, der US 1 276 855 A und der EP 2 166 252 A1 offenbart. Neben der hohen Über- oder Untersetzungsverhältnisse stellen derartige Schnecken-Planetengetriebe ein ruhiges Laufverhalten bei einer geringen Geräuschentwicklung bereit.

Zum drehbaren Lagern der Planetenräder können die Planetenträger mit dem Planetenträger verbundene Planetenradachsen aufweisen, wie es beispielsweise aus der WO 2014/095966 A1 bekannt ist. Auch können die Planetenradachsen einteilig mit dem Planetenträger ausgebildet sein, wie beispielsweise in der EP 2 860 338 A2 beschrieben.

Derartige Konzepte zum Lagern der Planetenräder eignen sich nicht, wenn die Planetenradachsen windschief zur Planetenträgerachse verlaufen sollen. Insbesondere stellt sich die Bereitstellung einer exakt ausgerichteten Planetenradachse als schwierig und aufwendig dar.

Aufgabe einer Ausführungsform der vorliegenden Erfindung ist es daher, einen Planetenträger anzugeben, der einfach zu fertigen ist und bei dem sich die Planetenradachsen exakt ausrichten und montieren lassen. Des Weiteren liegt einer Ausgestaltung der vorliegenden Erfindung die Aufgabe zugrunde, ein Schraubrad-Planetengetriebe zu schaffen, welches einfach zu fertigen ist und bei dem sich die Planetenradachsen exakt ausrichten und montieren lassen. Darüber hinaus liegt einer Ausbildung der Erfindung die Aufgabe zugrunde, eine Motor-Getriebeanordnung zu schaffen, welches ein derartiges Schraubrad-Planetengetriebe umfasst.

Diese Aufgabe wird mit den in den Ansprüchen 1, 8 und 9 angegebenen Merkmalen gelöst. Vorteilhafte Ausführungsformen sind Gegenstand der Unteransprüche.

Eine Ausführungsform der Erfindung betrifft einen Planetenträger zum Lagern zumindest eines Planetenrads in einem Planetengetriebe für eine Verstelleinrichtung zum Verstellen zweier zueinander verstellbarer Bauteile, wobei das Planetenrad eine Planetenradachse umfasst, welche einen über das Planetenrad überstehenden ersten Achsenabschnitt und einen über das Planetenrad überstehenden zweiten Achsenabschnitt aufweist, und der Planetenträger einen rohrförmigen Grundkörper, der eine äußere Oberfläche aufweist, zumindest einen im Grundkörper angeordneten und diesen durchdringenden Durchbruch, einen vom Durchbruch und von der äußeren Oberfläche ausgehenden ersten Lagerungsabschnitt, und einen vom Durchbruch und von der äußeren Oberfläche ausgehenden zweiten Lagerungsabschnitt umfasst, wobei der erste und der zweite Lagerungsabschnitt zur drehbaren Aufnahme des ersten und des zweiten Achsenabschnitts ausgebildet sind und der Planetenträger zumindest ein Fixiermittel zum Fixieren des ersten und des zweiten Achsenabschnitts in den Lagerungsabschnitten umfasst.

Der rohrförmige Grundkörper des Planetenträgers umschließt einen Innenraum, in welchem im montierten Zustand des Planetengetriebes das Sonnenrad angeordnet ist. Der den Grundkörper durchdringende Durchbruch ermöglicht den Eingriff der Planetenräder mit dem Sonnenrad. Folglich sind die Planetenräder so im Planetenträger gelagert, dass sie durch den Durchbruch teilweise in den Innenraum hineinragen.

Der erste und der zweite Lagerungsabschnitt gehen von der äußern Oberfläche des Grundkörpers und vom Durchbruch aus. Mit anderen Worten werden die Lagerungsabschnitte von Vertiefungen, die im Grundkörper angeordnet sind, gebildet. Da die Lagerungsabschnitte von der Oberfläche des Grundkörpers ausgehen und folglich radial nach außen offen sind, lassen sie sich relativ einfach fertigen, insbesondere auch deshalb, da sie von außen gut zugänglich sind. Auch aus diesem Grund lässt sich der Planetenträger einfach montieren. Hierzu müssen die Planetenräder nur von außen in die Lagerungsabschnitte eingesetzt und mit dem Fixiermittel fixiert werden. Insbesondere ist es möglich, die Planetenradachse vor dem Einsetzen in die Lagerungsabschnitte mit dem Planetenrad zu verbinden. Auch ist es möglich, Planetenräder mit integrierten Planetenradachsen zu verwenden. Planetenräder mit integrierten Planetenradachsen können beispielsweise spritzgegossen werden, so dass die Planetenräder und die Planetenradachsen ein einteiliges Bauteil bilden. In beiden Fällen ist die Baueinheit bestehend aus dem Planetenrad und der Planetenradachse vor dem Einsetzen in die Lagerungsabschnitte fertiggestellt. Folglich ist es bei der Montage des vorschlagsgemäßen Planetenträgers nicht notwendig, die Planetenradachse gegenüber dem Planetenrad auszurichten. Sind das Planetenrad und die Planetenradachse in den Planetenträger eingesetzt, kann das beispielsweise deckelförmig ausgebildete Fixiermittel ebenfalls von außen in die Lagerungsabschnitte eingesetzt werden, wodurch die Planetenradachsen in ihrer Lage fixiert werden. Die Fixiermittel selbst können beispielsweise mittels eines Reibschlusses oder mittels Verkleben am Planetenträger befestigt werden. Wie für die Planetenträger gilt auch für die Fixiermittel, dass sie aufgrund der Möglichkeit, sie von außen in die Lagerungsabschnitte einzusetzen, einfach montierbar sind. Alternativ können die Fixiermittel vom Grundkörper gebildet werden, so dass sie keine zusätzlichen Bauteile darstellen.

Die mit der Verstelleinrichtung zueinander verstellbaren Bauteile können Fahrzeugteile wie Fahrzeugsitze, Heckklappen, Fahrzeugfenster oder Schiebedächer sein. Die Bauteile können aber auch Fenster, Jalousien oder Rollläden von Gebäuden oder Schiffen sein. Die akustischen Eigenschaften der mit dem vorschlagsgemäßen Planetenträger ausgerüsteten Verstelleinrichtung unterscheiden sich deutlich von bekannten Verstelleinrichtungen, so dass eine geringere Geräuschentwicklung erreicht werden kann.

Nach Maßgabe einer erfindungsgemäßen Ausführungsform sind die Fixiermittel als vom Grundkörper gebildete, elastisch verformbare Vorsprünge ausgebildet, so dass die Achsenabschnitte in die Lagerungsabschnitte einclipsbar oder eingeclipst sind. In dieser Ausführungsform sind die Fixiermittel nicht als separate Bauteile ausgebildet, sondern im Grundkörper des Planetenträgers integriert. Hierdurch wird die Montage des Planetenträgers weiter vereinfacht, da die Planetenräder mit ihren Planetenradachsen nur noch in die Lagerungsabschnitte hineingedrückt werden müssen. Auch wird die Logistik der Montage vereinfacht, weil die Fixiermittel nicht vorgehalten werden müssen. Eine separate Lagerhaltung für die Fixiermittel entfällt daher. Weiterhin bilden die Vorsprünge eine Hinterschneidung, wodurch der Traganteil der Lagerungsabschnitte erhöht und die Lagerung der Planetenräder im Planetenträger verbessert werden.

Gemäß einer weiteren erfindungsgemäßen Ausführungsform sind die Fixiermittel als vom Grundkörper gebildete, plastisch verformte Vorsprünge ausgebildet. In dieser Ausführungsform werden die Planetenradachsen zunächst in die Lagerungsabschnitte eingelegt und anschließend wird der Grundkörper so verformt, dass plastisch verformte Vorsprünge ausgebildet werden. Auch in dieser Ausführungsform sind die Fixiermittel nicht als separate Bauteile ausgebildet, sondern im Grundkörper des Planetenträgers integriert. Zudem bilden die Vorsprünge auch in dieser Ausführungsform Hinterschneidungen, welche den Planetenradachsen in den Lagerungsabschnitten halten.

In einer weitergebildeten Ausführungsform können die Lagerungsabschnitte jeweils eine Begrenzungsfläche zum Begrenzen der axialen Bewegbarkeit des Planetenrads aufweisen. Je nach Ausgestaltung der Fixiermittel können auch sie die axiale Bewegbarkeit des Planetenrads begrenzen, allerdings stellt es keinen fertigungstechnischen Mehraufwand dar, die Lagerungsabschnitte mit jeweils einer Begrenzungsfläche zu versehen. Die Begrenzungsfläche begrenzt die Lagerungsabschnitte innerhalb des Planetenträgers so dass auch das Materialvolumen, welches für die Bereitstellung der Lagerungsabschnitte vom rohrförmigen Körper entnommen werden muss, gering gehalten wird. Zudem sind die Lagerungsabschnitte vollumfänglich geschlossen. Folglich weist der Planetenträger eine vergleichsweise hohe Torsionssteifigkeit auf.

Auch wenn die Planetenradachse mit einem Presssitz im Planetenträger befestigt ist, neigt sie im Betrieb zum Wandern entlang der Richtung der von der Planetenradachse definierten Drehachse, um welche sich die Planetenräder drehen. Die Begrenzungsflächen dienen daher als Anschlag für die Planetenradachsen. Ein gewisses axiales Spiel der Planetenräder ist notwendig, um beispielsweise ein Verklemmen des Planetengetriebes bei Temperaturschwankungen zu verhindern. Dieses axiale Spiel lässt sich mit der Anordnung der Begrenzungsflächen und der Länge der Planetenradachsen einstellen. Das Spiel wird insbesondere so gewählt, dass die Planetenräder nicht an den Durchbrüchen anliegen können, so dass die Drehbarkeit der Planetenräder nicht beeinträchtigt wird.

Bei einer weitergebildeten Ausführungsform können der rohrförmige Grundkörper eine Planetenträgerachse definieren und die Lagerungsabschnitte so angeordnet sein, dass die Planetenradachse windschief zu der Planetenträgerachse verläuft, wenn die Achsenabschnitte in den Lagerungsabschnitten aufgenommen sind. In diesem Fall ist das Planetengetriebe als ein Schraubrad-Planetengetriebe ausgestaltet. Grundsätzlich kann der vorschlagsgemäße Planetenträger auch für herkömmliche Planetengetriebe verwendet werden, bei denen die Planetenradachsen parallel zu der Planetenträgerachse verläuft. Die oben genannten Vorteile kommen auch bei herkömmlichen Planetengetrieben vollumfänglich zum Tragen. Bei Schraubrad-Planetengetrieben, bei denen die Planetenradachsen windschief zu der Planetenträgerachse verlaufen, stellt der Planetenträger ein komplexes und schwer herstellbares Bauteil dar. Insbesondere lässt sich die exakte Ausrichtung der Planetenradachsen fertigungstechnisch nur mit sehr viel Aufwand umsetzen, welche die Fertigung verkompliziert.

Der fertigungstechnische Mehraufwand beim vorschlagsgemäßen Planetenträger, die Lagerungsabschnitte und den Durchbruch um den gewünschten Winkel bezogen auf eine Parallele zur Planetenträgerachse gedreht herzustellen, hält sich in überschaubaren Grenzen. Die Montage des Planetenträgers wird von der windschiefen Ausrichtung der Planetenradachsen gegenüber der Planetenträgerachse nicht oder nur unwesentlich beeinflusst. Insofern kommen die Vorteile, die sich mit dem vorschlagsgemäßen Planetenträger erreichen lassen, bei Schraubrad-Planetengetrieben besonders zum Tragen.

Bei einer weiteren Ausführungsform kann das Planetenrad eine Planetenradverzahnung mit einer Balligkeit aufweisen. Insbesondere bei Koaxial-Getrieben stellt die Balligkeit einen besonders gleichmäßigen Eingriff mit dem Sonnenrad bereit, wodurch sich eine gute Laufruhe und eine geringe Geräuschentwicklung realisieren lassen.

Eine weitergebildete Ausführungsform zeichnet sich dadurch aus, dass das Planetenrad eine Planetenradverzahnung mit einer Profilüberdeckung aufweist. Auch die Profilüberdeckung trägt zu einer guten Laufruhe und einer geringen Geräuschentwicklung bei.

Nach Maßgabe einer weiteren Ausführungsform besteht der Planetenträger aus Kunststoff oder umfasst Kunststoff. Mit Kunststoff lässt sich der Planetenträger insbesondere gegenüber einem Planetenträger aus Metall besonders leicht fertigen, was zu einer Gewichtsersparnis beispielsweise im Fahrzeug führt.

Eine weitere Ausführungsform zeichnet sich dadurch aus, dass der Planetenträger spritzgegossen ist. Der vorschlagsgemäße Planetenträger lässt sich im Spritzgussverfahren in großer Stückzahl kostengünstig herstellen. Aufgrund der Tatsache, dass die Lagerungsabschnitte radial nach außen offen sind, lassen sie sich radial gut entformen, weshalb sich der vorschlagsgemäße Planetenträger besonders für die Fertigung im Spritzgussverfahren eignet.

Eine Ausgestaltung der Erfindung betrifft ein Schraubrad-Planetengetriebe für eine Verstelleinrichtung zum Verstellen zweier zueinander verstellbarer Bauteile, umfassend einen Planetenträger nach einem der vorher beschriebenen Ausführungsformen, der eine Planetenträgerachse definiert, eine Schraubradwelle, welche um die Planetenträgerachse drehbar gelagert ist und eine Schraubradverzahnung aufweist, die mit der Planetenradverzahnung in Eingriff steht, und ein Innenschraubrad mit einer Innenverzahnung, welche mit der Planetenradverzahnung in Eingriff steht.

Eine Ausbildung der Erfindung betrifft eine Motor-Getriebeanordnung insbesondere für eine Verstelleinrichtung zum Verstellen zweier zueinander verstellbarer Bauteile, umfassend einen Elektromotor und ein Schraubrad-Planetengetriebe nach der zuvor beschriebenen Ausgestaltung, wobei der Elektromotor eine Motorwelle aufweist, welche drehfest mit der Schraubradwelle verbunden ist.

Die technischen Effekte und Vorteile, die sich mit dem vorschlagsgemäßen Schraubrad-Planetengetriebe und der vorschlagsgemäßen Motor-Getriebeanordnung erreichen lassen, entsprechen denjenigen, die für den vorliegenden Planetenträger erörtert worden sind. Zusammenfassend sei darauf hingewiesen, dass sich die Montage des Planetengetriebes und der Motor-Getriebeanordnung aufgrund der vorschlagsgemäßen Gestaltung des Planetenträgers vereinfachen lässt. Insbesondere lassen sich Schraubrad-Planetengetriebe, bei denen die die Planetenradachse windschief zur Planetenträgerachse verläuft, auf einfache Weise fertigen.

Eine weitere Ausbildung zeichnet sich dadurch aus, dass das Innenschraubrad drehfest mit dem Elektromotor verbunden ist. Im Allgemeinen ist es einfacher, das Innenschraubrad drehfest am Elektromotor zu befestigen als das Innenschraubrad zwar axial fixiert, aber drehbar mit dem Elektromotor zu verbinden. Zudem weist die Motor-Getriebeanordnung außen keine drehbaren Teile auf, da das Innenschraubrad den sich drehenden Planetenträger umschließt, wodurch sich die Sicherheit im Betrieb der Motor-Getriebeanordnung erhöhen lässt.

Zudem betrifft die Erfindung die Verwendung eines vorschlagsgemäßen Planetenträgers in Verstelleinrichtungen in Fahrzeugen zum Verstellen zweier zueinander verstellbarer Fahrzeugteile.

Beispielhafte Ausführungsformen der Erfindung werden im Folgenden unter Bezugnahme auf die beigefügten Zeichnungen näher erläutert. Es zeigen
- Figur 1a): eine perspektivische Darstellung eines Ausführungsbeispiels eines vorschlagsgemäßen Planetenträgers mit drei Planetenrädern im nicht montierten Zustand,
- Figur 1b): den in Figur 1a) dargestellten Planetenträger im montierten Zustand,
- Figur 2: den in Figur 1b) dargestellten, montierten Planetenträger anhand einer Teilschnittdarstellung,
- Figur 3: eine vergrößerte Darstellung eines Bereichs des geschnittenen Teils der Figur 2, und
- Figur 4: eine Teilschnittdarstellung einer MotorGetriebeanordnung mit dem in den Figuren 1a) bis 3 dargestellten Planetenträger.

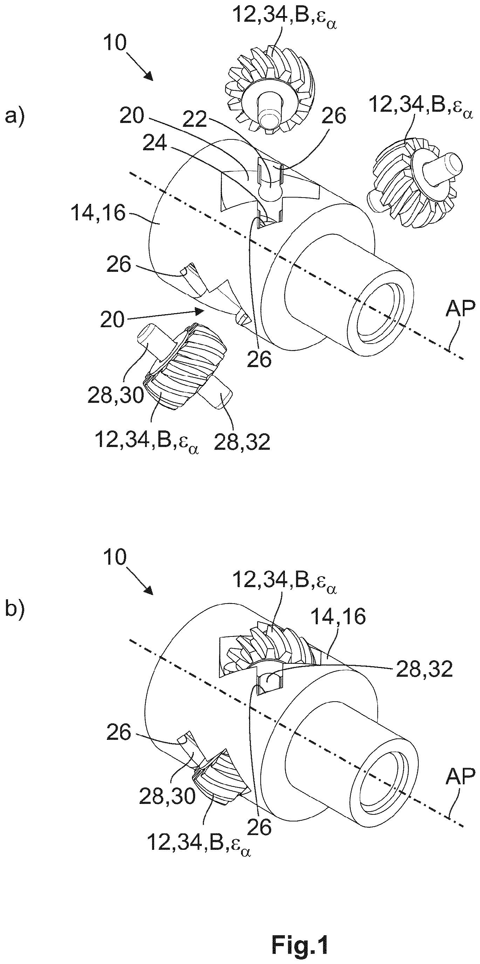

Figur 1a) zeigt eine perspektivische Darstellung eines Ausführungsbeispiels eines vorschlagsgemäßen Planetenträgers 10 mit drei Planetenrädern 12 im nicht montierten Zustand. Figur 1b) zeigt den in Figur 1b) gezeigten Planetenträger 10 im montierten Zustand.

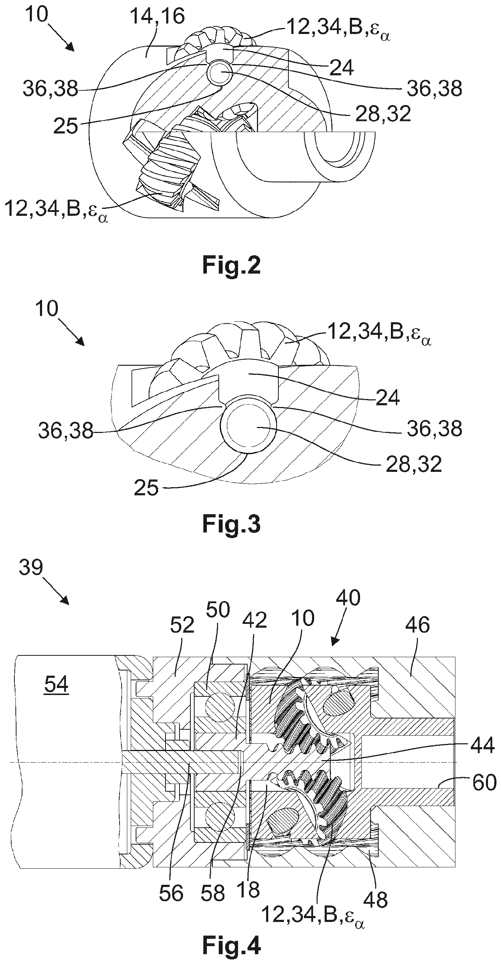

Der Planetenträger 10 umfasst einen rohrförmigen Grundkörper 14 mit einer äußeren Oberfläche 16. Der rohrförmige Grundkörper 14 umschließt einen Innenraum 18, der in Figur 4 am besten zu erkennen ist. Zudem definiert der Grundkörper 14 eine Planetenträgerachse AP.

Der rohrförmige Grundkörper 14 weist drei Durchbrüche 20 auf, welche den Grundkörper 14 von der äußeren Oberfläche 16 zum Innenraum 18 hin durchdringen. Darüber hinaus sind im Grundkörper 14 pro Durchbruch 20 ein erster Lagerungsabschnitt 22 und ein zweiter Lagerungsabschnitt 24 angeordnet, welche jeweils vom Durchbruch 20 und von der äußeren Oberfläche 16 ausgehen. Die Lagerungsabschnitte 22, 24 münden daher in den Durchbruch 20 und sind zur äußeren Oberfläche 16 hin offen. Die Lagerungsabschnitte 22, 24 durchdringen den Grundkörper 14 nur teilweise und stellen daher keine Verbindung zum Innenraum 18 her. Die Lagerungsabschnitte 22, 24 weisen daher jeweils einen schalenförmigen Grund 25 auf (siehe Figuren 2 und 3). Weiterhin weisen die Lagerungsabschnitte 22, 24 jeweils eine Begrenzungsfläche 26 auf.

Die drei Planetenräder 12 umfassen jeweils eine Planetenradachse 28, welche einen ersten Achsenabschnitt 30 und einen zweiten Achsenabschnitt 32 aufweist, die jeweils über das Planetenrad 12 überstehen. Die Planetenräder 12 sind jeweils mit einer Planetenradverzahnung 34 versehen, die eine Balligkeit B und eine Profilüberdeckung ε_{α} aufweisen.

Zur Montage des Planetenträgers 10 werden die Planetenräder 12 mit der Planetenradachse 28 versehen. Die Planetenradachse 28 kann beispielsweise aus Metall gefertigt sein, auf welche das Planetenrad 12 aufgepresst wird. Alternativ können das Planetenrad 12 und die Planetenradachse 28 einteilig ausgeführt sein, wozu es sich anbietet, die Planetenradachse 28 und das Planetenrad 12 aus Kunststoff zu fertigen.

Die mit der Planetenradachse 28 versehenen Planetenräder 12 werden anschließend in den Durchbruch 20 und die beiden Lagerungsabschnitte 22, 24 eingesetzt, bis dass die Planetenradachse 28 auf dem Grund 25 der Lagerungsabschnitte 22, 24 aufliegen. Wie aus den Figuren 1a) und 1b) zu erkennen, ragt dabei das Planetenrad 12 radial nach außen über die äußere Oberfläche 16 des Planetenträgers 10 aus dem Durchbruch 20 heraus. Aus Figur 4 ist erkennbar, dass das Planetenrad 12 in den Innenraum 18 hineinragt.

Der Durchbruch 20 und die Lagerungsabschnitte 22, 24 sind so angeordnet, dass die Planetenradachsen 28 windschief zur Planetenträgerachse AP verlaufen, wenn die Achsenabschnitte 30, 32 in den Lagerungsabschnitten 22, 24 aufgenommen sind. Die axiale Beweglichkeit des Planetenrads 12 wird von den Begrenzungsflächen 26 begrenzt. Wenn von einer axialen Beweglichkeit der Planetenräder 12 die Rede ist, bezieht sich diese auf eine Bewegung entlang einer von den Planetenradachsen 28 und den Lagerungsabschnitten 22, 24 definierten Drehachse, um welche sich die Planetenräder 12 im Planetenträger 10 drehen können.

Die Begrenzungsfläche 26 schließt die Lagerungsabschnitte 22, 24 axial ab, so dass das für die Bereitstellung der Lagerungsabschnitte 22, 24 vom Grundkörper 14 entnommene Materialvolumen gering gehalten wird. Die Torsionssteifigkeit des Grundkörpers 14 wird im Gegensatz zu Lagerungsabschnitten 22, 24, die ohne die Stirnwand 26 im Grundkörper 14 auslaufen würden, erhöht.

Die Planetenradachsen 28 sind so bemessen, dass sie eine gewisse axiale Beweglichkeit der Planetenräder 12 zulassen. Allerdings ist die axiale Beweglichkeit so gewählt, dass die Planetenräder 12 im Durchbruch 20 nicht an den Grundkörper 14 anliegen können. Hierdurch wird die Drehbarkeit der Planetenräder 12 gewährleistet.

In den Figuren 2 und 3 ist der montierte Planetenträger 10 anhand von Teilschnittdarstellungen gezeigt. Insbesondere aus der Figur 3 ist erkennbar, dass der Planetenträger 10 Fixiermittel 36 aufweist, mit welchen die Achsenabschnitte 30, 32 der Planetenradachsen 28 in den Lagerungsabschnitten 22, 24 fixiert werden können. Im dargestellten Ausführungsbeispiel sind die Fixiermittel 36 als elastische Vorsprünge 38 ausgebildet, die vom Grundkörper 14 gebildet sind und in die Lagerungsabschnitte 22, 24 hineinragen. Beim Einsetzen der Achsenabschnitte 30, 32 in die Lagerungsabschnitte 22 24 werden die Vorsprünge 38 kurzzeitig verformt. Wenn die Achsenabschnitte 30, 32 auf dem Grund 25 der Lagerungsabschnitte 22, 24 aufliegen, kehren die Vorsprünge 38 in ihre ursprüngliche Form zurück und bilden eine Hinterschneidung, so dass die Achsenabschnitte 30, 32 formschlüssig in den Lagerungsabschnitten 22, 24 fixiert werden. Insofern können die Achsenabschnitte 30, 32 in die Lagerungsabschnitte 22, 24 eingeclipst werden. Zudem erhöht die Hinterschneidung den Traganteil der Lagerungsabschnitte 22, 24, wodurch die Lagerung der Achsenabschnitte 30, 32 erhöht wird.

In Figur 4 ist eine Motor-Getriebeanordnung 39 anhand einer Teilschnittdarstellung gezeigt, welche ein Schraubrad-Planetengetriebe 40 mit dem in den Figuren 1 bis 3 dargestellten Planetenträger 10 umfasst. Zudem umfasst das Schraubrad-Planetengetriebe 40 eine Schraubradwelle 42, welche eine Schraubradverzahnung 44 aufweist, die mit der Planetenradverzahnung 34 in Eingriff steht. Weiterhin umfasst das Schraubrad-Planetengetriebe 40 ein Innenschraubrad 46 mit einer Innenverzahnung 48, die in die Planetenradverzahnung 34 eingreift. Die Schraubradwelle 42 ist mit einem Kugellager 50 axial und radial gelagert, wobei das Kugellager 50 in einer Lageraufnahme 52 angeordnet ist.

Ferner umfasst die Motor-Getriebeanordnung 39 einen Elektromotor 54 mit einer Motorwelle 56, welche aus dem Elektromotor 54 herausragt. Die Schraubradwelle 42 bildet eine Motorwellenaufnahme 58, in welche die Motorwelle 56 drehfest eingreift. Die Lageraufnahme 52 ist drehfest am Elektromotor 54 befestigt. Zudem ist das Innenschraubrad 46 drehfest mit der Lageraufnahme 52 verbunden. Dadurch, dass das Innenschraubrad 46 drehfest an der Lageraufnahme 52 und indirekt drehfest am Elektromotor 54 befestigt ist, wird die Drehung der Motorwelle 56 in eine Drehung des Planetenträgers 10 umgesetzt. Der Planetenträger 10 weist eine Mitnahme 60 auf, mit welcher eine nicht dargestellte Abtriebswelle drehfest verbunden werden kann.

### Bezugszeichenliste

- 10: Planetenträger
- 12: Planetenrad
- 14: Grundkörper
- 16: äußere Oberfläche
- 18: Innenraum
- 20: Durchbruch
- 22: erster Lagerungsabschnitt
- 24: zweiter Lagerungsabschnitt
- 25: Grund
- 26: Begrenzungsfläche
- 28: Planetenradachse
- 30: erster Achsenabschnitt
- 32: zweiter Achsenabschnitt
- 34: Planetenradverzahnung
- 36: Fixiermittel
- 38: Vorsprung
- 39: Motor-Getriebeanordnung
- 40: Schraubrad-Planetengetriebe
- 42: Schraubradwelle
- 44: Schraubradverzahnung
- 46: Innenschraubrad
- 48: Innenverzahnung
- 50: Kugellager
- 52: Lageraufnahme
- 54: Elektromotor
- 56: Motorwelle
- 58: Motorwellenaufnahme
- 60: Mitnahme
- AP: Planetenträgerachse
- B: Balligkeit
- ε_{α}: Profilüberdeckung

## Patentansprüche

1. Planetenträger (10) zum Lagern zumindest eines Planetenrads (12) in einem Planetengetriebe (40) für eine Verstelleinrichtung zum Verstellen zweier zueinander verstellbarer Bauteile, wobei
- das Planetenrad (12) eine Planetenradachse (28) umfasst, welche einen über das Planetenrad (12) überstehenden ersten Achsenabschnitt (30) und einen über das Planetenrad (12) überstehenden zweiten Achsenabschnitt (32) aufweist, und
der Planetenträger (10)
- einen rohrförmigen Grundkörper (14), der eine äußere Oberfläche (16) aufweist,
- zumindest einen im Grundkörper (14) angeordneten und diesen durchdringenden Durchbruch (20),
- einen vom Durchbruch (20) und von der äußeren Oberfläche (16) ausgehenden ersten Lagerungsabschnitt (22), und
- einen vom Durchbruch (20) und von der äußeren Oberfläche (16) ausgehenden zweiten Lagerungsabschnitt (24) umfasst, wobei
- der erste und der zweite Lagerungsabschnitt (22, 24) zur drehbaren Aufnahme des ersten und des zweiten Achsenabschnitts (30, 32) ausgebildet sind und
- der Planetenträger (10) zumindest ein Fixiermittel (36) zum Fixieren des ersten und des zweiten Achsenabschnitts (30, 32) in den Lagerungsabschnitten (22, 24) umfasst,
**dadurch gekennzeichnet, dass** die Fixiermittel (36) als vom Grundkörper (14) gebildete, elastisch verformbare Vorsprünge (38) ausgebildet sind, so dass die Achsenabschnitte (30, 32) in die Lagerungsabschnitte (22, 24) einclipsbar oder eingeclipst sind, oder die Fixiermittel (36) als vom Grundkörper (14) gebildete, plastisch verformte Vorsprünge (38) ausgebildet sind.

2. Planetenträger (10) nach Anspruch 1,
**dadurch gekennzeichnet, dass** die Lagerungsabschnitte (22, 24) jeweils eine Begrenzungsfläche (26) zum Begrenzen der axialen Bewegbarkeit des Planetenrads (12) aufweisen.

3. Planetenträger (10)nach einem der Ansprüche 1 oder 2,
**dadurch gekennzeichnet, dass** der rohrförmige Grundkörper (14) eine Planetenträgerachse (AP) definiert und die Lagerungsabschnitte (22, 24) so angeordnet sind, dass die Planetenradachse (28) windschief zu der Planetenträgerachse (AP) verläuft, wenn die Achsenabschnitte (30, 32) in den Lagerungsabschnitten (22, 24) aufgenommen sind.

4. Planetenträger (10) nach einem der vorherigen Ansprüche,
**dadurch gekennzeichnet, dass** das Planetenrad (12) eine Planetenradverzahnung (34) mit einer Balligkeit (B) aufweist.

5. Planetenträger (10) nach einem der vorherigen Ansprüche,
**dadurch gekennzeichnet, dass** das Planetenrad (12) eine Planetenradverzahnung (34) mit einer Profilüberdeckung (ε_{α}) aufweist.

6. Planetenträger (10) nach einem der vorherigen Ansprüche,
**dadurch gekennzeichnet, dass** der Planetenträger (10) aus Kunststoff besteht.

7. Planetenträger (10) nach Anspruch 6,
**dadurch gekennzeichnet, dass** der Planetenträger (10) spritzgegossen ist.

8. Schraubrad-Planetengetriebe insbesondere für eine Verstelleinrichtung zum Verstellen zweier zueinander verstellbarer Bauteile, umfassend
- einen Planetenträger (10) nach einem der vorherigen Ansprüche, der eine Planetenträgerachse (AP) definiert,
- eine Schraubradwelle (42), welche um die Planetenträgerachse (AP) drehbar gelagert ist und eine Schraubradverzahnung (44) aufweist, die mit der Planetenradverzahnung (34) in Eingriff steht, und
- ein Innenschraubrad (46) mit einer Innenverzahnung (48), welche mit der Planetenradverzahnung (34) in Eingriff steht.

9. Motor-Getriebeanordnung insbesondere für eine Verstelleinrichtung zum Verstellen zweier zueinander verstellbarer Bauteile, umfassend
- einen Elektromotor (54) und
- ein Schraubrad-Planetengetriebe (40) nach Anspruch 8, wobei
- der Elektromotor (54) eine Motorwelle (56) aufweist, welche drehfest mit der Schraubradwelle (42) verbunden ist.

10. Motor-Getriebeanordnung nach Anspruch 9,
**dadurch gekennzeichnet, dass** das Innenschraubrad (46) drehfest mit dem Elektromotor (54) verbunden ist.

## Claims

1. Planet carrier (10) for supporting at least one planet ring (12) in a planet gear (40) for an adjustment device for adjusting two components which are adjustable relative to each other, wherein
- the planet ring (12) comprises a planet ring axis (28) that has a first axis segment (30) extending beyond the planet ring (12) and a second axis segment(32) extending beyond the planet ring (12), and
the planet carrier (10) comprises
- a tubular base body (14) which has an outer surface (16),
- a least one through-hole (20) arranged in and extending through the base body (14),
- a first support segment (22) extending out of the through-hole (14) and the outer surface (16), and
- a second support segment (24) extending out of the through-hole (20) and the outer surface (16), wherein
- the first and the second support segment (22, 24) are configured to rotatably receive the first and the second axis segment (30, 32) and
- the planet carrier (10) includes at least one fixing means (36) for fixing the first and the second axis segment (30, 32) in the support segments (22, 24),
**characterized in that** the fixing means (36) are implemented as elastically deformable protrusions (38) formed from the base body (14) such that the axis segments (30, 32) can be snapped into or are snapped in the support segments (22, 24), or the fixing means (36) are implemented as plastically deformable protrusions (38) formed from the base body (14).

2. Planet carrier (10) in accordance with claim 1,
**characterized in that** each of the support segments (22, 24) has a limitation region (26) to limit the axial movement of the planet ring (12).

3. Planet carrier (10) in accordance with any of claims 1 or 2,
**characterized in that** the tubular base body (14) defines a planet carrier axis (AP) and **in that** the support segments (22, 24) are arranged such that the planet ring axis (28) extends askew to the planet carrier axis (AP) when the axis segments (30, 32) are held in place in the support segments (22, 24).

4. Planet carrier (10) in accordance with any of the preceding claims,
**characterized in that** the planet ring (12) has a planet ring gearing (34) with a convexity (B).

5. Planet carrier (10) in accordance with any of the preceding claims,
**characterized in that** the planet ring (12) has a planet ring gearing (34) with a profile covering (ε_{α}).

6. Planet carrier (10) in accordance with any of the preceding claims,
**characterized in that** the planet carrier (10) is made of plastic.

7. Planet carrier (10) in accordance with claim 6,
**characterized in that** the planet carrier (10) is injection molded.

8. Helical planet gear drive, in particular for an adjustment device for adjusting two components which are adjustable relative to each other, comprising
- a planet carrier (10) in accordance with any of the preceding claims that defines a planet carrier axis (AP),
- a helical gear shaft (42) which is mounted to rotate around the planet carrier axis (AP) and which has a helical gearing (44) that engages with the planet ring gearing (34), and
- an inner helical gear (46) with an inner gearing (48) that engages with the planet ring gearing (34).

9. Motor drive arrangement, in particular for adjusting two components which are adjustable relative to each other, comprising
- an electric motor (54) and
- a helical planet gear drive (40) in accordance with claim 8, wherein
- the electric motor (54) has a motor shaft (56) which is non-rotatably attached to the helical gear shaft (42).

10. Motor drive arrangement in accordance with claim 9,
**characterized in that** the inner gearing (46) is non-rotatably attached to the electric motor (54).

## Revendications

1. Porte-satellite (10) pour recevoir au moins un satellite (12) d'un train épicycloïdal (40) pour une installation d'entraînement pour déplacer deux composants l'un par rapport à l'autre,
- le satellite (12) a un axe (28) qui dépasse du satellite (12) par un premier segment d'axe (30) et par un second segment d'axe (32) et
- le porte-satellite (10), comprend un corps de base (14) de forme tubulaire ayant une surface extérieure (16),
- au moins un passage (20) réalisé dans le corps de base (14) et traversant celui-ci,
- un premier segment de palier (22) issu du passage (20) et débouchant dans la surface extérieure (16) et,
- un second segment de palier (24) issu du passage (20) et débouchant dans la surface extérieure (16),
dans lequel :
- le premier et le second segment de palier (22, 24) sont réalisés pour recevoir à rotation le premier et le second segment d'axe (30, 32) et,
- le porte-satellite (10) comporte au moins un moyen de fixation (36) pour fixer le premier et le second segment d'axe (30, 32) dans les segments de palier (22, 24),
porte-satellite **caractérisé en ce que**
les moyens de fixation (36) sont réalisés sous la forme de reliefs (38) déformables élastiquement dans le corps de base (14) de façon que les segments d'axe (30, 32) ou soient enclipsables dans les segments de palier (22, 24) ou puissent être enclipsés,
les moyens de fixation sont réalisés sous la forme de reliefs (38) plastiquement déformables, réalisés dans le corps de base (14).

2. Porte-satellite (10) selon la revendication 1,
**caractérisé en ce que**
les segments de palier (22, 24) ont chacun une surface limite (26) délimitant la mobilité axiale du satellite (12).

3. Porte-satellite (10) selon l'une des revendications 1 ou 2,
**caractérisé en ce que**
le corps de base tubulaire (14) définit un axe de porte-satellite (AP) et les segments de palier (22, 24) sont disposés pour que l'axe de satellite (28) soit incliné par rapport à l'axe de porte-satellite (AP) lorsque les segments d'axe (30, 32) sont logés dans les segments de palier (22, 24).

4. Porte-satellite (10) selon l'une des revendications précédentes,
**caractérisé en ce que**
le satellite (12) a une denture (34) de forme bombée (B).

5. Porte-satellite (10) selon l'une des revendications précédentes,
**caractérisé en ce que**
le satellite (12) a une denture (34) ayant un rapport de conduite apparent (εα).

6. Porte-satellite (10) selon l'une des revendications précédentes,
**caractérisé en ce que**
le porte-satellite (10) est en matière plastique.

7. Porte-satellite (10) selon la revendication 6,
**caractérisé en ce que**
le porte-satellite (10) est injecté.

8. Engrenage planétaire de roue à vis, notamment pour une installation d'entraînement pour déplacer deux composants l'un par rapport à l'autre comprenant :
- un porte-satellite (10) selon l'une des revendications précédentes qui définit un axe de porte-satellite (AP),
- un arbre à roue à denture hélicoïdale (42) monté à rotation selon l'axe de porte-satellite (AP) et une denture hélicoïdale (44) en prise avec la denture de satellite (34) et,
- une roue à denture hélicoïdale (46) à denture intérieure (48) en prise avec la denture de satellite (34).

9. Dispositif de transmission de moteur, notamment pour une installation d'entrainement pour déplacer deux composants l'un par rapport à l'autre, comprenant
- un moteur électrique (54) et,
- un engrenage planétaire à roue à denture hélicoïdale (40) selon la revendication 8 dans lequel :
- le moteur électrique (54) a un arbre moteur (56) solidaire en rotation de l'arbre de roue à vis (42).

10. Dispositif de transmission de moteur selon la revendication 9,
**caractérisé en ce que**
la roue à denture hélicoïdale intérieure (46) est solidaire en rotation du moteur électrique (54).
